# EUROPÄISCHE PATENTSCHRIFT

(11) **EP 0 689 268 B1**
(45) Veröffentlichungstag und Bekanntmachung des Hinweises auf die Patenterteilung: **09.09.1998**
(21) Anmeldenummer: 95109321.0
(22) Anmeldetag: 16.06.1995
(51) Int. Cl.: H02B 13/035

(54) **Gekapselter Hochspannungsschalter in gasisolierten Schaltanlagen**
Enclosed high voltage switch for gas-insulated switchgears
Commutateur blindé à haute tension dans des appareillages de commutation à gaz isolant

(30) Priorität: 24.06.1994 DE 4422079
(43) Veröffentlichungstag der Anmeldung: 27.12.1995
(73) Patentinhaber: ABB PATENT GmbH, 68309 Mannheim (DE)
(72) Erfinder: Müller, Ottmar, D-12459 Berlin (DE)
(74) Vertreter: Rupprecht, Klaus, Dipl.-Ing.

(56) Entgegenhaltungen:
- EP-A- 0 433 183
- DE-A- 3 436 173

## Beschreibung

Die Erfindung betrifft einen gekapselten Hochspannungsschalter für eine gasisolierte Schaltanlage gemäß dem Oberbegriff des Anspruches 1.

Gekapselte Hochspannungsschalter für derartige Schaltanlagen sind in großem Umfang bekannt geworden. Allen gekapselten Schaltern in gasisolierten Schaltanlagen ist gemeinsam, daß sich je nach Anzahl der Phasen eine oder mehrere Schaltkammern innerhalb eines Kapselungsgehäuses befinden, wobei außerhalb des Kapselungsgehäuses ein Kurbelwellenantrieb vorgesehen ist, dessen bewegliche Teile ins Innere der Kapselungsanlage eingeführt werden, so daß bei der Durchführung der Antriebsstangen, die mit dem beweglichen Kontaktstück der einzelnen Schaltkammern verbunden sind, Dichtungen vorgesehen sein müssen, die ein bewegliches Bauteil abdichten.

Ein gekapselter Hochspannungsschalter der eingangs genannten Art ist aus der EP 0 433 183 A1 bekannt geworden. Dort befindet sich die Schaltkammer für jede Phase in einem Isoliergehäuse; die Antriebswelle mit einer Kurbelstange verläuft innerhalb des Kapselungsgehäuses, wogegen der Antrieb für die Antriebswelle außerhalb des Kapselungsgehäuses vorgesehen ist.

Aufgabe der Erfindung ist es, einen gekapselten Hochspannungsschalter in einer gasisolierten Schaltanlage der eingangs genannten Art zu schaffen, bei der der Aufbau vereinfacht ist; insbesondere soll die Anzahl der Dichtungen, die als bewegte Dichtungen bezeichnet werden sollen, verringert werden.

Diese Aufgabe wird erfindungsgemäß gelöst durch die kennzeichnenden Merkmale des Anspruches 1.

Erfindungsgemäß wird bzw. werden innerhalb des Kapselungsgehäuses ein oder drei Isoliergehäuse untergebracht, so daß zwischen dem Kapselungsgehäuse und der Schaltkammer sog. ruhende Dichtungen benötigt werden.

Weitere vorteilhafte Ausgestaltungen der Erfindung sind den Unteransprüchen zu entnehmen.

Erfindungsgemäß wird dabei das Kurbelantriebsgehäuse mit dem Innenraum der Schaltkammer verbunden, so daß das Kurbelantriebsgehäuse das gleiche Gas mit gleichem Druck aufweist, wie der Innenraum jeder Schaltkammer. Damit kann das Kurbelantriebsgehäuse als Gasspeicher verwendet werden, was insbesondere dann vorteilhaft ist, wenn das Verhältnis des Gasvolumens des Kurbelantriebsgehäuses zum Gasvolumen aller Schaltkammern etwa 1 : 2 beträgt. Durch diese Verwendung des Kurbelantriebsgehäuses sind die Innenräume der Schaltkammern über das Kurbelantriebsgehäuse miteinander verbunden, so daß innerhalb einer einzelnen Schaltkammer keine Druck- bzw. Dichteschwankungen und keine Schwankungen der Gasqualität im Vergleich zu den anderen Schaltkammern zu befürchten sind.

Dadurch, daß die Schaltersäulen selbst als Isoliergehäuse ausgebildet sind, ist eine relativ enge Nebeneinanderanordnung möglich. Darüberhinaus sind, was besonders vorteilhaft ist, zwei- und dreipolige Kurzschlüsse in dem Kapselungsgehäuse verhindert, so daß die Anordnung die gleiche Sicherheit bietet wie eine einpolig gekapselte Schaltanlage.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Schnittansicht eines gekapselten Hochspannungsschalters für eine gasisolierte Schaltanlage gemäß Schnittlinie I-I der Fig. 2,
- Fig. 2: eine Schnittansicht gemäß Schnittlinie II-II der Fig. 1 und
- Fig. 3: eine Schnittansicht gemäß Schnittlinie III-III der Fig. 1.

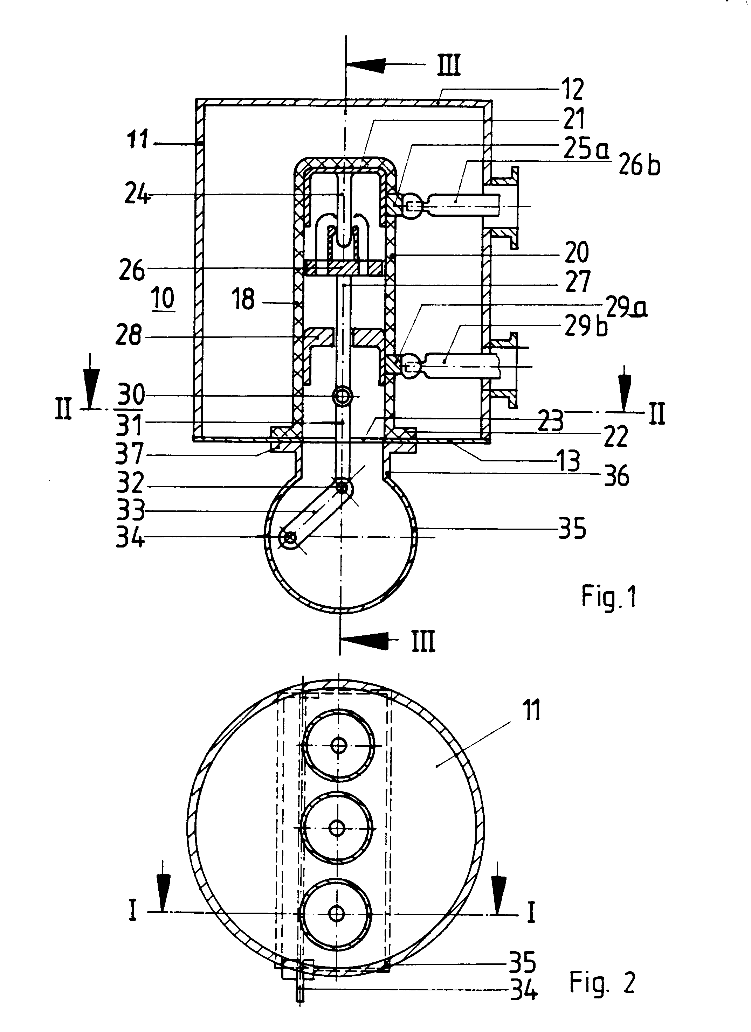

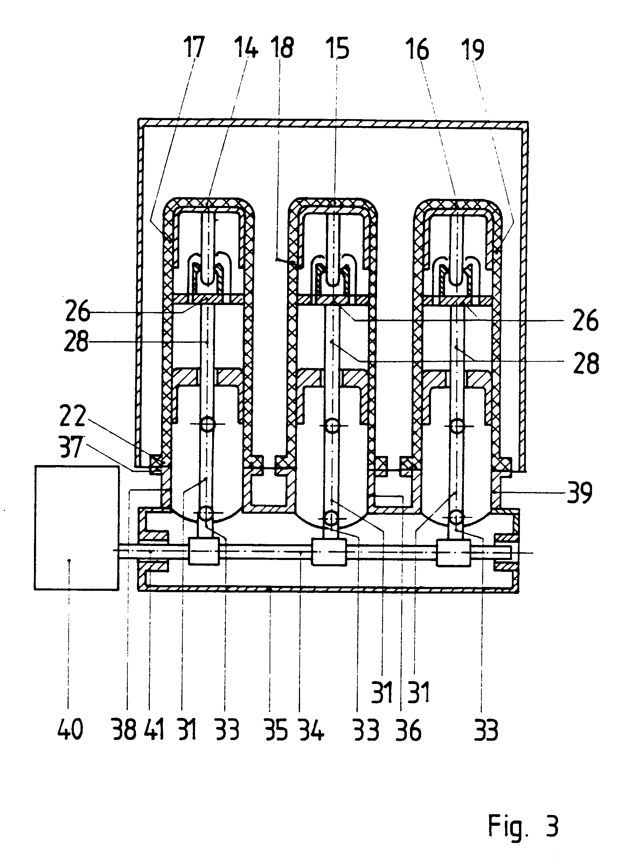

Die Fig. 1 zeigt einen dreipolig gekapselten Leistungsschalter 10, mit einem zylinderförmigen Kapselungsgehäuse 11, das aus dünnem Metallblech besteht. Das Kapselungsgehäuse 11, dessen Längsachse vertikal angeordnet ist, ist oben mittels eines Dekkels 12 und unten mittels eines Bodens 13 abgeschlossen. Innerhalb des Kapselungsgehäuses 11 befinden sich drei Schaltkammern 14, 15 und 16 (in Fig. 3), die jeweils ein Isolierstoffgehäuse 17, 18 und 19 aufweisen. Die Isolierstoffgehäuse 17 bis 19, die anhand des Isolierstoffgehäuses 18 und anhand der Fig. 1 beschrieben werden, besitzen einen zylindrischen Abschnitt 20, dessen eines Ende, welches zum Deckel 12 hin gerichtet ist, mittels eines Gehäusebodens 21 abgeschlossen ist; dieser Gehäuseboden 21 ist in das Isoliergehäuse integriert; das andere, zum Boden 13 hin gerichtete Ende ist mit einem Flansch 22 versehen, mit dem es, eine Öffnung 23 im Boden 13 umgebend, gegen die Innenfläche des Bodens 13 angeschraubt ist. Das Isolierstoffgehäuse kann auch aus zwei Teilen zusammengesetzt werden, das obere Teil enthält die wesentlichen Aktivteile der Schaltkammer (Löscheinrichtungen), der untere Teil die Erdisolierung und eine der beiden Stromzuführungen. Auf der Innenfläche des Gehäusebodens 21 ist lediglich schematisch dargestellt ein festes Kontaktstück 24 befestigt, an dem eine den zylindrischen Abschnitt 20 gasdicht durchgreifende Stromzuführungsleitung 25a angeschlossen ist. Mit dem festen Kontaktstück 24 wirkt ein ebenfalls nur schematisch dargestelltes bewegliches Kontaktstück 26 zusammen, das an einer Trägerstange 27 angeschlossen ist, die mittels eines im Inneren des zylindrischen Abschnittes 20 gehaltenen Führungsträgers 28 in ihrer Längsrichtung verschiebbar geführt ist. Der Führungsträger 28 ist aus elektrisch leitendem Material und steht mit der Stange 27 in elektrisch leitender Verbindung. Der Führungsträger 28 ist mit einer Ausführungsleitung 29a elektrisch leitend verbunden, die gasdicht aus dem Isoliergehäuse 18 herausgeführt ist. Die Leiterstücke 25b und 29b verbinden die Ausführungsleitungen aus den Schaltkammern mit den Nachbarkomponenten (nicht gezeichnet) einer Schaltanlage. Die Ausleitungen 25a und 29a können in den Isoliersäulen auf unterschiedlichen Seiten angeordnet werden. In Ergänzung zu der in den Fig. 1...3 gezeigten Grundanordnung ist eine Leiterausleitung aus der Schaltkammer auch im Bereich des Isolierbodens 21 nach oben möglich. An der Stange 27 ist mittels eines Gelenkes 30 eine Pleuelstange 31 angelenkt, die über ein Pleuelgelenk 32 mit einem Kurbelhebel 33 einer Kurbelwelle 34 gelenkig verbunden ist. Die Pleuelstange 31 ist dabei aus isolierendem Material hergestellt.

Auf der Unterseite des Bodens 13 ist ein Antriebskurbelgehäuse 35 angeschlossen, welches einen kreiszylindrischen Querschnitt und eine Rohrform aufweist. Diese Rohrform besitzt eine der Anzahl der Phasen entsprechende Anzahl von Stutzen 36, die mittels eines Flansches 37 an der Außenfläche des Bodens 13 befestigt sind, so daß die beiden Flansche 22 und 37 auf beiden Seiten des Bodens 13 sich gegenüberstehend am Boden 13 befestigt sind. Der Flansch 37 bzw. der Stutzen 36 umgibt die Öffnung 23 ebenfalls.

Aus der Fig. 3 ist ersichtlich, daß an dem Kurbelantriebsgehäuse 35 drei Stutzen 38, 36 und 39 angeformt sind, die senkrecht zur Längsachse des Kurbelantriebsgehäuses 35 verlaufen und deren Mittelachsen jeweils mit den Mittelachsen der zugeordneten Isoliergehäuse 17, 18 und 19 fluchten. Daß die beweglichen Kontaktstücke 26 der anderen Phasen und die daran anschließenden Stangen 28 den Komponenten der Schaltkammer 15 entsprechen, ist durch die Verwendung der gleichen Bezugsziffern angedeutet. In gleicher Weise sind die Stangen 28 der Schaltkammern der anderen Phasen mit den entsprechenden Pleuel- oder Verbindungsstangen 31 mit den Kurbelhebeln 33 der anderen Phasen verbunden, so daß die Kurbelwelle 34 gleichzeitig alle Schaltkammern betätigt.

Innerhalb des Kurbelantriebsgehäuses 35 ist die Antriebswelle 34 an den beiden Enden des Kurbelantriebsgehäuses 35 gelagert; an dem in der Zeichnung Fig. 3 links befindlichen Ende ist die Antriebswelle 34 aus dem Antriebskurbelgehäuse 35 herausgeführt und mit einem Drehantrieb 40 gekuppelt.

Man ersieht insbesondere aus den Fig. 1 und 3, daß der Innenraum des Antriebskurbelgehäuses 35 unmittelbar mit dem Innenraum der Schaltkammern 14 bis 16 in Verbindung steht, so daß zwischen dem Innenraum der Schaltkammern 14 bis 16 und dem Innenraum des Kapselungsgehäuses 11 lediglich im Bereich der Flansche 22 eine sog. statische Dichtung vorgesehen ist. Im Falle der Teilung der Isoliergehäuse ergibt sich naturgemäß eine weitere statische Dichtung pro Schaltkammer. Zwischen den Flanschen 37 an den Stutzen 38 und 39 und dem Boden 13 ist ebenfalls jeweils lediglich eine statische Dichtung vorgesehen; eine dynamische Dichtung befindet sich lediglich im Bereich der Durchführung 41, mit der die Antriebswelle 34 aus dem Antriebskurbelgehäuse 35 herausgeführt ist.

Die Ausführung des beweglichen Kontaktstückes und des damit zusammenwirkenden festen Kontaktstückes der einzelnen Schaltkammern ist in den Fig. 1 bis 3 lediglich rein schematisch dargestellt; es kann jede Art einer Kontaktausgestaltung verwendet werden, z. B. eine Düsenanordnung, in der der beim Schalten entstehende Lichtbogen beblasen wird; das Löschgas wird vorzugsweise mit einem Blaskolben erzeugt, der einen Raum innerhalb der Isoliergehäuse 17 bis 19 komprimiert und den entstehenden Lichtbögen zuführt.

Das Antriebskurbelgehäuse 35, welches bei der Ausführung nach Fig. 1 bis 3 unterhalb der Schaltkammern 14 bis 16 angeordnet ist, trägt die Isoliergehäuse 17 bis 19 und auch das Kapselungsgehäuse 11. Es dient dabei, da es unter Schaltdruck steht, zugleich für alle drei Schaltkammern als zentraler Druckspeicher und kann evtl. notwendige Gasreinigungsfilter aufnehmen.

Der Schaltkammerdruck beträgt zwischen 0,3 MPa bis 0,5 MPa, wogegen das Kapselungsgehäuse etwa 0,15 MPa und 0,20 MPa aufnimmt. Die einzige, eine Bewegung aufnehmende Dichtung ist die Dichtung im Bereich der Durchführung 41, die als Drehdichtung ausgebildet sein muß. Alle anderen Dichtungen sind sog. ruhende oder statische Dichtungen.

Das Antriebskurbelgehäuse 35 ist als rohrförmiges Gehäuse ausgebildet; es kann selbstverständlich jede Querschnittsform aufweisen. Eine rohrförmige Ausgestaltung ist jedoch preisgünstiger herzustellen. Da das Innere des Antriebskurbelgehäuses 35 mit den Innenräumen der einzelnen Isoliergehäuse 17 bis 19 in Verbindung steht, ist auch nur eine einzige druck- bzw. gasdichte Überwachung erforderlich. Da der Innenraum des Antriebskurbelgehäuses 35 mit den Isoliergehäusen 17 bis 19 über große Querschnitte in Verbindung steht, entstehen innerhalb der einzelnen Pole keine besonderen Druck- bzw. Dichteschwankungen und darüberhinaus auch keine Schwankungen der Gasqualität.

## Patentansprüche

1. Gekapselter Hochspannungsschalter in gasisolierten Schaltanlagen, mit einem ein Isoliergas, vorzugsweise SF₆, enthaltenen Kapselungsgehäuse (11), in dem eine der Anzahl der Phasen entsprechende Anzahl von Schaltkammern (14, 15, 16) untergebracht ist, die gemeinsam mittels einer einen Antrieb und eine dessen Antriebsbewegung auf die Schaltkammern (14, 15, 16) übertragende Kurbeltriebsanordnung (34, 33, 31) aufweisenden Antriebsvorrichtung betätigbar sind, wobei jede Schaltkammer (14, 15, 16) in jeweils einem Isoliergehäuse (17, 18, 19) untergebracht ist, die bei mehrphasiger Anordnung in einer Ebene parallel nebeneinander liegen, dadurch gekennzeichnet, daß die Isoliergehäuse (17 bis 19) an einem die Kurbeltriebsanordnung (34, 33, 31) aufnehmenden Antriebskurbelgehäuse (35) angeflanscht sind, dessen Innenraum mit den Innenräumen der Isoliergehäuse (17 bis 19) in Verbindung steht, und daß das Antriebskurbelgehäuse (35) außerhalb des Kapselungsgehäuses (11) vorgesehen ist.

2. Gekapselter Hochspannungsschalter nach Anspruch 1, dadurch gekennzeichnet, daß die Kurbeltriebsanordnung eine Antriebswelle (34) und eine der Anzahl der Phasen entsprechende Anzahl von mit den beweglichen Kontaktstücken (26) gelenkig verbundenen Pleuelstangen (33) aufweist, und daß das Antriebsgehäuse einen rohrförmigen Querschnitt aufweist.

3. Gekapselter Hochspannungsschalter nach Anspruch 2, dadurch gekennzeichnet, daß am Antriebskurbelgehäuse (35) eine der Anzahl der Phasen entsprechende Anzahl von senkrecht zur Antriebskurbelgehäuseachse verlaufenden Flanschstutzen angebracht ist, mittels denen das Antriebskurbelgehäuse an der Außenfläche des Kapselungsgehäuses (11) befestigt ist, und daß die Isoliergehäuse (17 bis 19) an der Innenfläche des Kapselungsgehäuses (11) befestigt sind, wobei die Achsen der Stutzen mit denen der Isoliergehäuse fluchten.

4. Gekapselter Hochspannungsschalter nach einem der vorherigen Ansprüche, dadurch gekennzeichnet, daß die Isoliergehäuse (17 bis 19) senkrecht und in einer Ebene parallel zueinander verlaufen und das Antriebskurbelgehäuse (35) unterhalb des Kapselungsgehäuses (11) angeordnet ist.

5. Gekapselter Hochspannungsschalter nach einem der vorherigen Ansprüche, dadurch gekennzeichnet, daß bei dünnwandigem Kapselungsgehäuse (11) die Isoliergehäuse (17 bis 19) der Schaltkammern (14 bis 16) auf den Stutzen (38) des Antriebskurbelgehäuses (35) befestigt sind, und daß das Kapselungsgehäuse unter Zwischenfügung je einer statischen Dichtung zwischen den Flanschen (22, 37) der Isoliergehäuse (17 bis 19) und der Stutzen (38, 39, 36) festgelegt und gehaltert ist.

6. Gekapselter Hochspannungsschalter nach einem der vorherigen Ansprüche, dadurch gekennzeichnet, daß die Isoliergehäuse (17 bis 19) aus zwei Teilen zusammengesetzt sind, einem oberen Teil, der die aktiven Löscheinrichtungen zumindest einer Ausführungsleitung enthält, und einem unteren Teil, der die Erdisolation bildet, in die eine zweite Ausführungsleitung integriert ist.

## Claims

1. Encapsulated high-voltage switch in gas-insulated switchgear, having an encapsulating housing (11) which contains an insulating gas, preferably SF₆, and in which a number of switching chambers (14, 15, 16) corresponding to the number of phases are accommodated, which switching chambers can be operated jointly by means of a drive device which has a drive and a crank drive arrangement (34, 33, 31) which transmits the drive movement of said drive to the switching chambers (14, 15, 16), each switching chamber (14, 15, 16) being accommodated in in each case one insulating housing (17, 18, 19), the insulating housings, in the case of a multi-phase arrangement, lying in a plane, parallel and side by side, characterized in that the insulating housings (17 to 19) are flange-connected to a drive crank housing (35) which accommodates the crank drive arrangement (34, 33, 31) and whose interior is connected to the interiors of the insulating housings (17 to 19), and in that the drive crank housing (35) is provided outside the encapsulating housing (11).

2. Encapsulated high-voltage switch according to Claim 1, characterized in that the crank drive arrangement has a drive shaft (34) and a number of connecting rods (33), which are connected in an articulated manner to the moving contact pieces (26), corresponding to the number of phases, and in that the drive housing has a tubular cross-section.

3. Encapsulated high-voltage switch according to Claim 2, characterized in that a number of flange connecting stubs, which run at right angles to the drive crank housing axis, corresponding to the number of phases are fitted on the drive crank housing (35), by means of which flange connecting stubs the drive crank housing is mounted on the outer surface of the encapsulating housing (11), and in that the insulating housings (17 to 19) are mounted on the inner surface of the encapsulating housing (11), the axes of the connecting stubs being aligned with those of the insulating housings.

4. Encapsulated high-voltage switch according to one of the preceding claims, characterized in that the insulating housings (17 to 19) run vertically and in a plane parallel to one another and the drive crank housing (35) is arranged underneath the encapsulating housing (11).

5. Encapsulated high-voltage switch according to one of the preceding claims, characterized in that, in the case of a thin-walled encapsulating housing (11), the insulating housings (17 to 19) of the switching chambers (14 to 16) are mounted on the connecting stubs (38) of the drive crank housing (35), and in that the encapsulating housing is fixed and held between the flanges (22, 37) of the insulating housings (17 to 19) and the connecting stubs (38, 39, 36) with the interposition of in each case one static seal.

6. Encapsulated high-voltage switch according to one of the preceding claims, characterized in that the insulating housings (17 to 19) are composed of two parts, an upper part which contains the active extinguishing devices of at least one outgoing line, and a lower part which forms the earth insulation and in which a second outgoing line is integrated.

## Revendications

1. Commutateur à haute tension sous enveloppe, destiné à des postes à isolation gazeuse, avec une enveloppe de blindage (11) qui contient un gaz diélectrique, de préférence du SF₆ et dans laquelle des chambres de coupure (14, 15, 16) sont prévues en nombre égal au nombre de phases, lesquelles chambres de coupure peuvent être actionnées simultanément par un dispositif d'entraînement comprenant un moyen d'entraînement et un mécanisme à bielles -manivelles(34, 33, 31) de transmission du mouvement du moyen d'entraînement aux chambres de coupure (14, 15, 16), les chambres de coupure (14, 15, 16) étant logées chacune dans une enveloppe isolante (17, 18, 19) qui, dans une installation polyphasée, sont disposées côté à côte dans un plan, caractérisé par le fait que les enveloppes isolantes (17 à 19) sont fixées par bride à un carter (35) qui reçoit le mécanisme à bielles -manivelles (34, 33, 31) et dont la chambre intérieure communique avec la chambre intérieure de l'enveloppe isolante (17 à 19) et par le fait que le carter (35) est prévu à l'extérieur de l'enveloppe de blindage (11).

2. Commutateur à haute tension sous enveloppe, selon la revendication 1, caractérisé par le fait que le mécanisme à bielles -manivelles comporte un arbre d'entraînement (34) et un nombre de bielles (33) égal au nombre de phases, qui sont liées de manière articulée aux pièces de contact mobiles (36) et par le fait que le carter de mécanisme à bielles-manivelles présente une section tubulaire.

3. Commutateur à haute tension sous enveloppe, selon la revendication 2, caractérisé par le fait que le carter de mécanisme à bielles-manivelles est pourvu de manchettes à brides en nombre égal au nombre de phases, qui s'étendent perpendiculairement à l'axe du carter de mécanisme à bielles-manivelles et à l'aide desquelles ledit carter est fixé à la face extérieure de l'enveloppe de blindage (11) et par le fait que les enveloppes isolantes (17 à 19) sont fixées à la face intérieure de l'enveloppe de blindage (11), les axes des manchettes étant alignés avec les axes des enveloppes isolantes.

4. Commutateur à haute tension sous enveloppe, selon une des revendications précédentes, caractérisé par le fait que les enveloppes isolantes (17 à 19) sont disposées verticalement et sont mutuellement parallèles dans un plan et que le carter de mécanisme à bielles-manivelles (35) est disposé au-dessous de l'enveloppe de blindage (11).

5. Commutateur à haute tension sous enveloppe, selon une des revendications précédentes, caractérisé par le fait que, dans le cas d'un enveloppe de blindage (11) à paroi de faible épaisseur, les enveloppes isolantes (17 à 19) des chambres de coupure (14 à 16) sont fixées sur les manchettes (38) du carter de mécanisme à bielles-manivelles et que l'enveloppe de blindage est fixée et tenue entre les brides (22, 37) des enveloppes isolantes (17 à 19) et des manchettes (38, 39, 36), avec interposition chaque fois d'un joint statique.

6. Commutateur à haute tension sous enveloppe, selon une des revendications précédentes, caractérisé par le fait que dans les enveloppes isolantes (17 à 19) sont formées de deux parties, d'une partie supérieure qui contient les dispositifs de soufflage actifs d'au moins une ligne de sortie et d'une partie inférieure qui constitue l'isolation contre la terre et dans laquelle une deuxième ligne de sortie est intégrée.
